# EUROPÄISCHE PATENTSCHRIFT

(11) **EP 2 534 274 B1**
(45) Veröffentlichungstag und Bekanntmachung des Hinweises auf die Patenterteilung: **31.08.2016**
(21) Anmeldenummer: 11701025.6
(22) Anmeldetag: 25.01.2011
(51) Int. Cl.: C22C 21/04, C22C 21/10, B22C 9/06, B22D 15/00, B22D 27/04

(54) **VERFAHREN UND VORRICHTUNG ZUR HERSTELLUNG VON KRAFTFAHRZEUG-FAHRWERKTEILEN**
METHOD AND DEVICE FOR PRODUCING MOTOR VEHICLE CHASSIS PARTS
PROCÉDÉ ET SYSTÈME POUR FABRIQUER DES PIECES DE CHÂSSIS D'AUTOMOBILE

(30) Priorität: 11.02.2010 DE 102010007812
(43) Veröffentlichungstag der Anmeldung: 19.12.2012
(73) Patentinhaber: TRIMET Aluminium SE, 45356 Essen (DE); KSM Castings Group GmbH, 31137 Hildesheim (DE)
(72) Erfinder: KOCH, Hubert, 46282 Dorsten (DE); KLEINE, Andreas, 38889 Blankenburg/Harz (DE); STARK, Erhard, 56477 Nister-Möhrendorf (DE); LOGANATHAN, Manikandan, 31134 Hildesheim (DE); GREVEN, Klaus, 31141 Hildesheim (DE); GOLZ, Roland, 38855 Wernigerode (DE)
(74) Vertreter: Flaccus, Rolf-Dieter
(86) Internationale Anmeldenummer: PCT/EP2011/000291
(87) Internationale Veröffentlichungsnummer: WO 2011/098213

(56) Entgegenhaltungen:
- EP-A1- 1 645 647
- WO-A1-2005/075692
- WO-A1-2005/090628
- WO-A2-2007/051162
- AT-B- 204 793
- DE-A1- 19 627 930
- DE-A1-102007 017 690
- DE-A1-102007 037 931
- GB-A- 2 118 079
- GB-A- 2 229 407
- JP-A- 2 284 741
- JP-A- 7 032 121
- US-A- 3 619 181
- US-A- 4 674 553
- Aluminium Rheinfelden GmbH: "Anwendungsmerkblatt Unifont-90 Unifont-90 dv", , August 1999 (1999-08), XP002634411, Gefunden im Internet: URL:www.alurheinfelden.com/c/document_libr ary/get_file?p_¦_id=135938folderId=516378n ame=DLFE-492.pdf [gefunden am 2011-04-27]
- J.R. Davis: "ASM Specialty Handbook Aluminium and Aluminium Alloys", 1996, ASM International, Materials Park, OH, XP002634412, Seite 45 - Seite 45

## Beschreibung

Die Erfindung betrifft ein Verfahren und eine Vorrichtung zur Herstellung von auf Zug, Druck und Torsion beanspruchbaren Kfz-Fahrwerksteilen mit über den jeweiligen Querschnitt einstellbarer mechanischer Festigkeit, einer hohen Duktilität und Temperaturstabilität, aus einer AlSiZnMg-Legierung durch Kokillenguss.

Es ist bekannt, hochbeanspruchte Fahrwerksteile aus warmaushärtenden Legierungen durch Schwerkraft- oder Niederdruckguss herzustellen. Zu den warmaushärtenden Legierungen zählen beispielsweise G-AlSi12, G-AlSi10Mg, G-AlSi5Mg, G-Al3Si sowie kupferhaltige Legierungen, die zusätzlich auch Titan, Magnesium, Nickel, oder Nickel und Magnesium enthalten können.

Die Wärmebehandlung hängt von der jeweiligen Legierung ab. Beispielsweise wird die G-AlSi10Mg bei 520 bis 530°C lösungsgeglüht und nach einer Lösungsglühdauer von 3 bis 5 Stunden in Wasser von 20°C abgeschreckt. Die Warmauslagerung erfolgt bei Temperaturen zwischen 160 und 165°C für 8 bis 10 Stunden. Genaue Angaben über die Wärmebehandlung von Gussstücken finden sich im Kapitel 7.8 auf den Seiten 429 ff. des Aluminiumtaschenbuches, 14. Auflage, für die jeweiligen Legierungen.

Die nach dem Gießprozess durchzuführende mehrstufige Wärmebehandlung ist zeit- und kostenaufwendig. Der Erfolg der Wärmebehandlung hängt vom genauen Einhalten der Behandlungsvorschriften ab und die jeweils verwendeten Glühöfen dürfen nur eine sehr geringe räumliche Schwankung der Temperatur zulassen. Da die Bedingungen für das Aushärten immer für das gesamte Bauteil gelten, kann das Gefüge nicht optimal an die über den Querschnitt variierende Beanspruchung der Fahrwerksteile angepasst werden. Normalerweise müssen folgende Mindestwerte für die mechanische Festigkeit erreicht werden:
Streckgrenze größer 160 MPa und Dehnung A größer 5%.

GB 2229407 A beschreibt eine Methode zur Herstellung eines Fahrzeugrahmens, bei der ein hohler, dem Rahmenkörper ähnlicher Kern in eine Form eingebracht wird, das Kerninnere abgesaugt wird und geschmolzenes Metall in einen Hohlraum zwischen Kern und Gießfläche der Form eingefüllt wird.

Aufgabe der vorliegenden Erfindung ist es, ein einfaches und kostengünstiges Verfahren sowie eine für die Durchführung geeignete Gießeinrichtung vorzuschlagen, die es ermöglichen, mit einer kaltaushärtenden Legierung vom Typ AlSiZnMg hochbeanspruchbare Fahrwerksteile mit über den jeweiligen Querschnitt einstellbaren mechanischen Festigkeitswerten, hoher Duktilität und Temperaturstabilität sowie einer geringen Porosität herzustellen.

Zur Lösung dieser Aufgabe wird eine Vorricthung und ein Verfahren gemäß der Ansprüche 1 und 9 vorgeschlagen.

Demzufolge betrifft das vorliegende Verfahren zur Herstellung von auf Zug-Druck und Torsion beanspruchbaren Kfz-Fahrwerksteilen die Beeinflussung der mechanischen Festigkeit, der Duktilität und der Temperaturstabilität eines aus einer AlSiZnMg-Legierung hergestellten Gussteiles.
Dabei wird erfindungsgemäß eine Aluminiumlegierung mit (in Gew.%)

| | |
|---|---|
| Si | 5 -11 % |
| Zn | 4 - 9 % |
| Mg | 0,2 - 1,0 % |
| Sr | 60 - 500 ppm |

sowie wahlweise mindestens einem der folgenden Elemente

| | |
|---|---|
| Mo | 0,01 - 0,15 % |
| B | 0,001 - 0,010 % |

und maximal

| | |
|---|---|
| Zr | 0,15 % |
| Ti | 0,15 % |
| Fe | 0,30 % |
| Cu | 0,10 % |

sowie weiteren Verunreinigungen
einzeln bis zu 0,07 %
insgesamt bis zu 0,15 %
in der im Folgenden beschriebenen Vorrichtung vergossen, wobei die einzelnen Formsegmente dieser Vorrichtung in einer punktförmig bis flächig ausgebildeten Zone gekühlt oder beheizt werden und dabei ein interdendritisches, eutektisches Mischkristallgefüge erzeugt wird, bestehend aus Al- Mischkristallen und AlSi-Eutektikum mit kohärenten Phasen, gebildet durch Ausscheidungen von MgZn₂ und/oder Mg₃Zn₃Al₂, und dann unmittelbar nach der Erstarrung das Gussteil der Form entnommen und kaltausgehärtet wird.

Vorzugsweise beträgt das Massenverhältnis Kokille/Fahrwerksteile gleich 0,9 - 1,2 und die eutektische Schmelze wird mit einer Abkühlrate von 0,01 bis 10° C/s zur Erzielung einer breiartigen Erstarrung mit interdendritisch im AlSi-Eutektikum verteilten intermetallischen Phasen in der Kokillenschale intermittierend gekühlt oder beheizt, wobei das AlSiZnMg-Mischkristallgefüge in jedem Querschnitt des Fahrwerksteiles homogen und identisch ausgebildet wird.

Zur Kornfeinung der Schmelze kann vorteilhaft B und/ oder Ti in Form von AlB₂, Al₃Ti und AlTiC zugesetzt und durch eine Schmelzebehandlung (Entgasung) ein Dichteindex von kleiner 10 % eingestellt werden.

Nach dem erfindungsgemäßen Verfahren wird die Schmelze von unten aufsteigend (Niederdruckkokille) oder von oben fallend (Schwerkraftkokille) in die schalenförmige Kokille eingefüllt, wobei die Kokillenwand während der Füllphase eine Temperatur von 350 bis 410° C aufweist und die Schmelze selektiv und intermittierend mit einer Abkühlrate von 5 bis 10° c/s an den Zug-/Druck-belasteten Querschnitten bis zur vollständigen Erstarrung abgeschreckt wird, während die duktilen Bereiche des Fahrwerksteils mit einer Abkühlrate von 0,1 bis 4 C/s abgekühlt werden.

Die erfindungsgemäße Vorrichtung zur Herstellung von hochbeanspruchbaren Fahrwerksteilen aus einer AlSiZnMg-Legierung besteht aus einem Stahlgrundrahmen 1, einem oder mehreren Formsegmenten 2, 3, einem Auswerfersystem und dem Gießsystem, ferner einer Temperatursteuerung für die Formsegmente in Verbindung mit einer Wasser- oder Luftkühlung sowie einer Beheizung, Formsegmenten 2, 3 aus Kokillenschalen mit dünn- und dickwandigen Bereichen, die schwimmend auf dem Grundrahmen 1 gelagert sind, wobei die dickwandigen Bereiche als Auflager für die Formsegmente auf dem Grundrahmen ausgebildet sind, wobei in den dünnwandigen Bereichen Spannbolzen zur punktuellen Verspannung der Formsegmente mit dem Grundrahmen angeordnet sind. Zur Kühlung der Formsegmente sind auf punktförmig bis flächig ausgebildeten Zonen Wasseranschlüsse oder Luftanschlüsse vorgesehen, wobei die örtliche Temperaturverteilung über Thermofühler erfassbar ist und die jeweilige thermische Spannung in den Formsegmenten über die Spannbolzen kompensiert wird.

Eine Weiterbildung der erfindungsgemäßen Vorrichtung besteht darin, dass die Auflager in den Randbereichen der Formsegmente (2, 3) angeordnet und mit je einer Zentrierung und einer Gleitfläche versehen sind, die mit einer entsprechend geformten Gegenfläche auf dem Stahlrahmen (1) korrespondiert.

Im Konturbereich der Kokillenschale werden Auswerfer neben der Gussteilentformung auch zur Entlüftung und im Bedarfsfall zur Kühlung des Formhohlraumes angeordnet.

Die Kokille kann über Schlitzdüsen und Entlüftungseinsätze 13-16 entlüftet werden, wobei vorzugsweise im Bereich von Kernmarken oder Kerneinsätzen bzw. Einlegeteilen eine Absaugung der Kerngase über entsprechende Anschlüsse erfolgt.

Vorteilhafterweise sind die punktförmig bis flächig ausgebildeten Zonen mit besonderen Kühleinrichtungen wie Stichkühlung oder Plattenkühlung versehen, wobei die punktförmigen Flächen - bezogen auf den Durchmesser - im Bereich von 10 bis 40 mm, vorzugsweise 15 - 25 mm liegen und die flächigen Zonen im Bereich von 1000 - 50000 mm² ausgebildet sind.

Im Folgenden wird die Erfindung anhand mehrerer Ausführungsbeispiele näher erläutert. Es zeigen:
Figur 1: Querschnitt durch eine erfindungsgemäße Vorrichtung
Figur 2: Teilquerschnitt im Randbereich der erfindungsgemäßen Vorrichtung gemäß Figur 1
Figur 3: Teilquerschnitt im mittleren Bereich der erfindungsgemäßen Vorrichtung gemäß Figur 1
Figur 4: Perspektivische Ansicht einer Kühleinrichtung für die flächige Kühlung der erfindungsgemäßen Vorrichtung

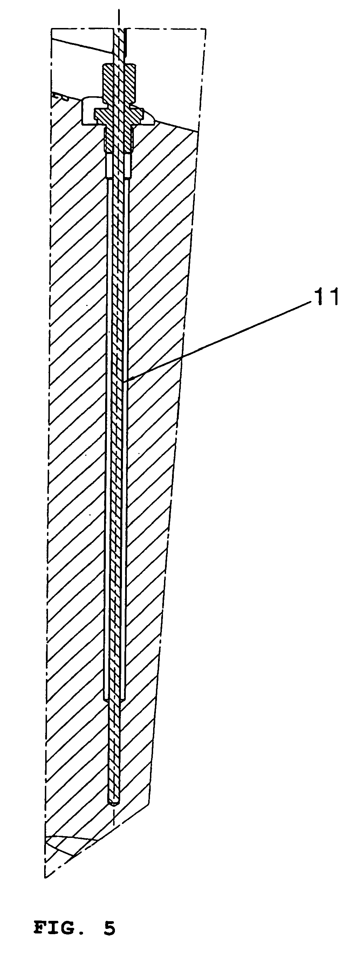

Figur 5: Teilquerschnitt durch eine erfindungsgemäße Vorrichtung im Bereich eines Temperaturfühlers
Figur 6: Teilquerschnitt durch eine erfindungsgemäße Vorrichtung im Bereich einer Stichkühlung
Figuren 7 bis 9: Drei Varianten einer erfindungsgemäßen Vorrichtung im Bereich einer Luftkühlung
Figur 10: Teilquerschnitt einer erfindungsgemäßen Vorrichtung im Bereich einer Entlüftung
Figur 11: Perspektivische Ansicht eines Entlüftungseinsatzes für die erfindungsgemäße Vorrichtung
Figuren 12 - 14: Verschiedene Varianten der erfindungsgemäßen Entlüftung
Figuren 15 - 17: Fließhilfen und Riffelungen der Kokillenwand gemäß vorliegender Erfindung
Figuren 18 - 19: Gestaltung und Anordnung der Auswerfer in der Kokille

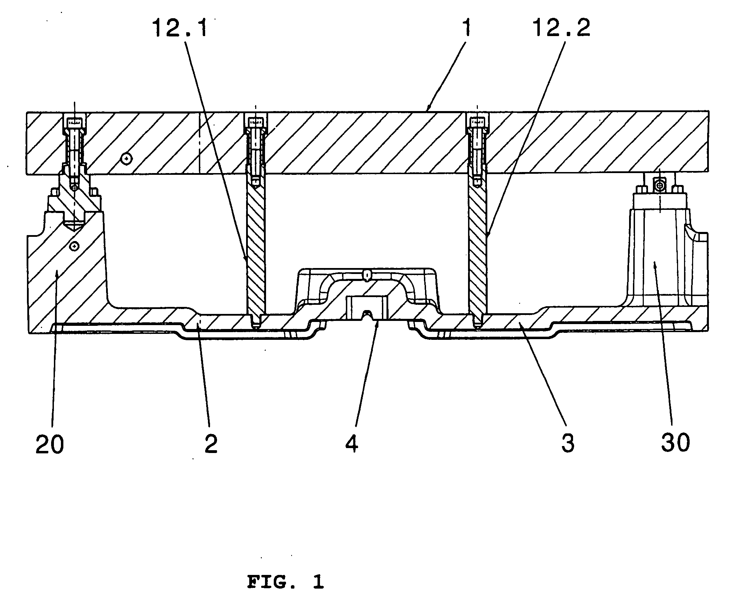

Figur 1 zeigt den Grundaufbau einer segmentierten Kokille für die Herstellung von auf Zug-Druck und Torsion beanspruchbaren Kfz-Fahrwerksteilen ohne Kühl- bzw. Heizeinrichtung. Die segmentierte, schalenförmig der Kontur eines Fahrwerksteils angepasste Kokille besteht aus einem Grundrahmen 1, Formsegmenten 2, 3 und Auflager 20, 30 zur Abstützung der Formsegmente gegenüber der Grundplatte 1.

Seitlich von einem Einsatz 4, der vorzugsweise aus einer hochbelastbaren Speziallegierung auf Wolfram-Nickelbasis besteht, sind Spannbolzen 12.1 und 12.2 angeordnet, die die Formsegmente 2, 3 mit der Grundplatte 1 verbinden.

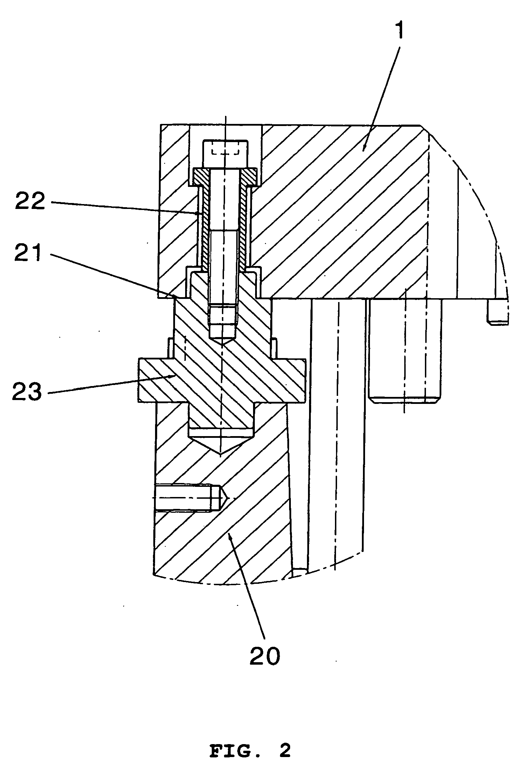

Gemäß Figur 1 weisen die Formsegmente 2, 3 dünn- und dickwandige Bereiche auf, wobei die dickwandigen Bereiche im Beispiel gemäß Figur 1 als Auflager 20, 30 ausgebildet sind. Eine genauere Darstellung dieses Auflagerbereiches ist dem Teilquerschnitt gemäß Figur 2 zu entnehmen.

Wie in Figur 2 dargestellt, wird der obere Teil des Auflagers 20 durch eine Gleitfläche 21 gebildet, die auf einem Gleitstück 23 angeordnet ist, welches kraftschlüssig mit dem Formsegment verbunden ist. Zur Zentrierung der Formsegmente auf der Grundplatte wird je ein Führungszapfen 22 mit dem Gleitstück 23 verbunden.

Diese Konstruktion ermöglicht es, dass bei auftretenden thermischen Spannungen eine Führung der Formsegmente im Grundrahmen gewährleistet ist und andererseits unzulässige Verformungen durch eine Vorspannung der Spannbolzen 12.1 bzw. 12.2. kompensiert werden können.

Die vorstehend beschriebene konstruktive Gestaltung der Formsegmente ist erforderlich, damit diese schwimmend auf dem Grundrahmen 1 gelagert werden können. Die Formsegmente sind dabei als sogenannte Kokillenschale ausgelegt, wobei die Oberfläche des Gussstücks konturfolgend zur Rückseite aufgedickt ist. Die Wandstärken liegen im Bereich von 28 - 30 mm in den dünnen Bereichen, so dass hier die einzelnen Segmente der Kokille gezielt gekühlt oder beheizt werden können, um das gewünschte interdendritische, eutektische Mischkristallgefüge erzeugen zu können, das aus Al-Mischkristallen und AlSi-Eutektikun mit kohärenten Phasen besteht. In speziellen Bereichen, in denen eine besonders kurze Aufwärm- bzw. Abkühlzeit vorgesehen ist, werden die Wandstärken der segmentierten Kokille 10 bis 20 mm reduziert.

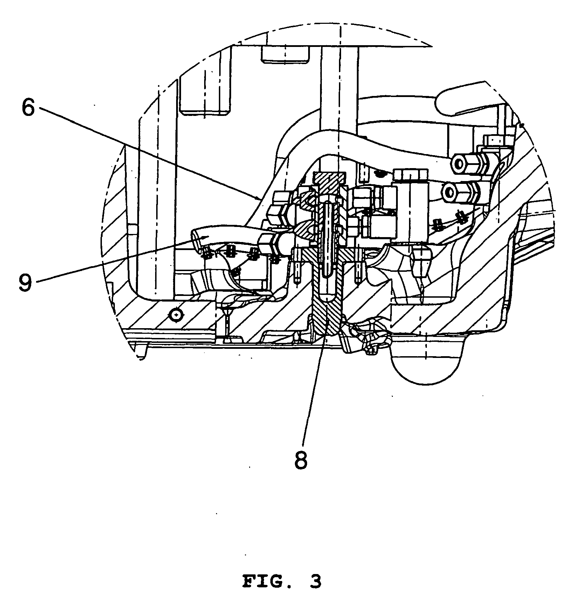

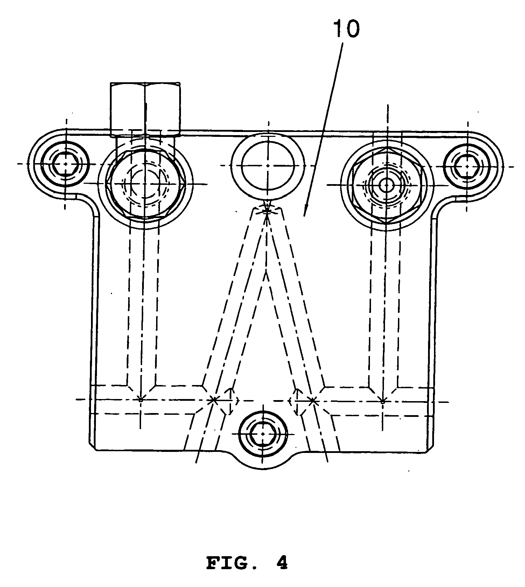

Erfindungsgemäß ist ferner vorgesehen, dass die Segmente in einer punktförmig bis flächig ausgebildeten Zone gekühlt oder beheizt werden können. Hierzu ist in Figur 3 ein Beispiel für eine punktuelle Kühlung durch eine Stichkühlung 8 und für eine flächig ausgebildete Kühlung durch Kühlluftkanal 9 gegeben. Für größere Kühlflächen, die gleichmäßig mit hoher Kühlleistung gekühlt werden sollen, kann die in Figur 4 dargestellte Kühleinrichtung in Form einer Kühlplatte 10 verwendet werden.
Die örtliche Temperaturenverteilung in den Formsegmenten lässt sich mittels Temperaturfühler 11 feststellen, wobei diese vorzugsweise mit einem Rechner (nicht dargestellt) verbunden sind, der über eine integrierte Prozessüberwachung die Einhaltung der vorgegebenen Kühl- bzw. Heizphasen überwacht und entsprechende Korrekturen bei Abweichung von den Sollwerten durchführt.

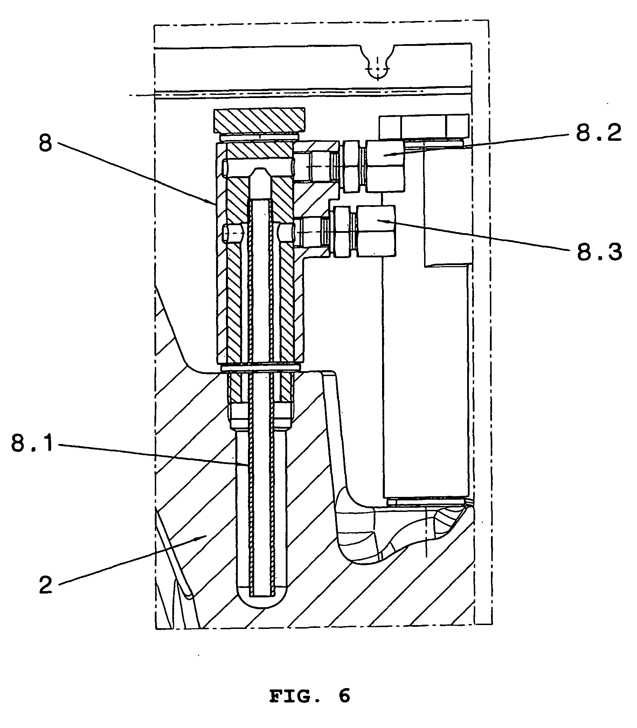

Figur 6 zeigt einen weiteren Teilquerschnitt durch die erfindungsgemäße Vorrichtung im Bereich der Stichkühlung 8. Dabei wird in den zu kühlenden Bereich des Formsegmentes 2 ein Kühlrohr 8.1 eingeführt und das Kühlmedium über Anschluss 8.2 eingeleitet. Die Kühlwirkung kann beispielsweise über die Menge und die Kühldauer des Kühlmittels gesteuert werden. Hierzu kann der Zufluss des Kühlmittels mittels Ventil bzw. der Abfluss mittels Drossel beeinflusst werden. Ziel dieser Maßnahme ist es, die mechanischen Kennwerte, die für die jeweiligen Fahrwerksteile benötigt werden, gezielt durch Steuerung des Erstarrungsprozesses zu beeinflussen.

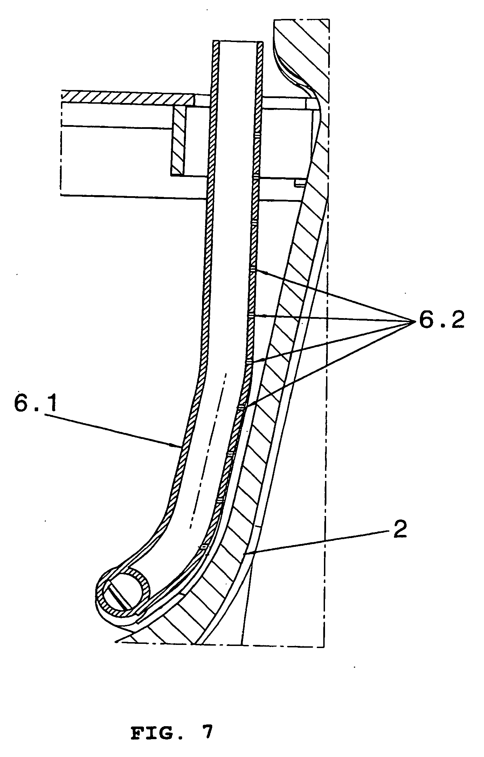

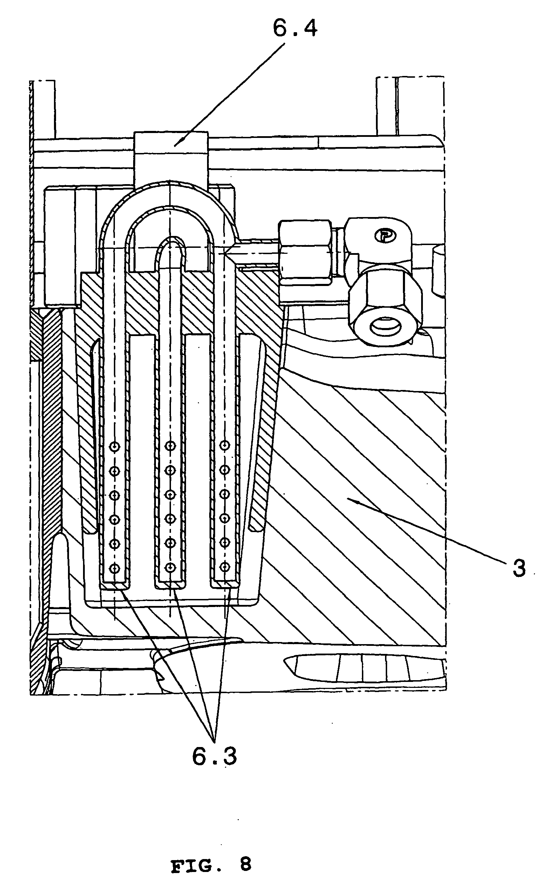

Für eine sanfte Kühlwirkung wird Luftkühlung eingesetzt, wobei gemäß Figur 7 und 8 verschiedene Varianten von Druckluftrohren einsetzbar sind. So ist in Figur 7 ein Druckluftrohr 6.1 mit vielen Luftaustrittsöffnungen 6.2 dargestellt, die gegen die Formwand der Formsegmente 2 gerichtet sind. Gemäß Figur 8 können auch mehrere parallel angeordnete Druckluftendrohre mit einem Zentralrohr 6.4 verbunden werden. Damit vergrößert sich die wirksame Kühlfläche, die gemäß Figur 8 aus einem verdickten Ende des Formsegmentes 3 besteht.
Mit den vorher erwähnten Maßnahmen kann nach dem Eingießen der Schmelze ein interdendritisches, eutektisches Mischkristallgefüge erzeugt werden, bestehend aus Al-Mischkristallen und AlSi-Eutektikum mit kohärenten Phasen, gebildet durch Ausscheidungen von MgZn₂ und/oder Mg₃Za₃Al₂.

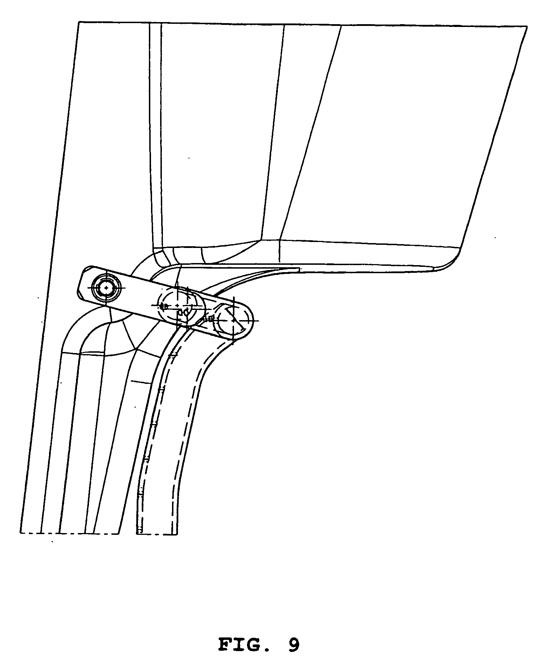

Für eine sanfte Kühlwirkung wird die Luftkühlung gemäß Figur 9 als Tümpelkühlung eingesetzt. Hierbei kann um den Gießtümpel ein gebogenes Kühlrohr gelegt werden, damit die Abkühlung der Restschmelze, mit dem Ziel der Steuerung der Zykluszeit, im Einguss gezielt beeinflusst werden kann.

Untersuchungen haben gezeigt, dass die mechanischen Eigenschaften ein Optimum erreichen, wenn das Massenverhältnis Kokille zu Fahrwerksteil vorzugsweise 0,9 bis 1,2 beträgt und die eutektische Schmelze mit einer Abkühlrate von 0,01 bis 10°C pro Sekunde intermittierend gekühlt und beheizt wird. Dabei werden die von den Thermofühlern gelieferten Daten in einer Prozesssteuerung als Regelgröße für eine optimale Erstarrung verwendet. Nach Patterson und Engler gibt es fünf verschiedene Erstarrungstypen, wobei sich je nach Legierungszusammensetzung und Abkühlungsbedingungen unterschiedliche Gefügestrukturen von stängelig-rauwandig bis dendritisch-vernetzt ausbilden.

Erfindungsgemäß wurde festgestellt, dass bei einer breiartigen Erstarrung der Schmelze mit interdendritisch im AlSi-Eutektikum verteilten intermetallischen Phasen die besten mechanischen Festigkeitswerte erreicht werden, wobei das AlSiZnMg-Mischkristallgefüge in jedem Querschnitt des Fahrwerksteils nach den vorgegebenen Abkühlungsbedingungen homogen und identisch ausgebildet werden konnte.

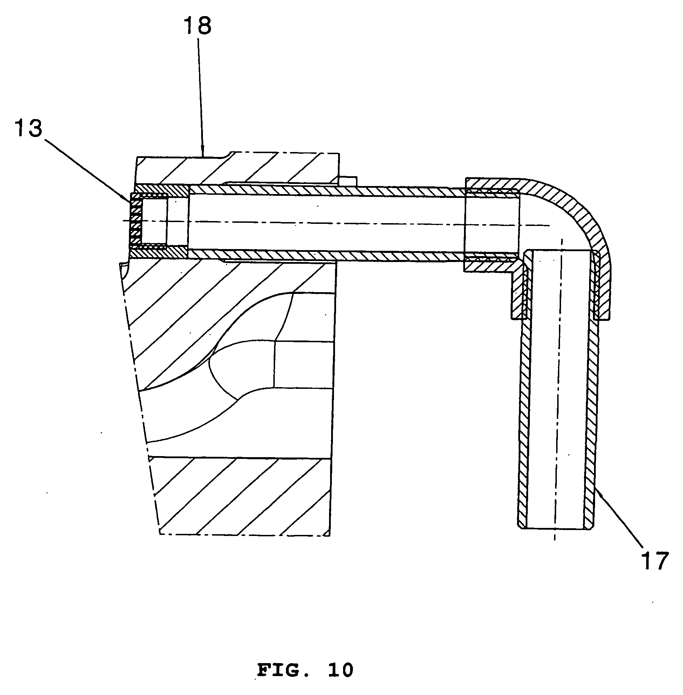

Für das Erreichen einer hohen Gussqualität ist es weiterhin erforderlich, dass die Kokille effektiv entlüftet wird und Einschlüsse in den Gussteilen vermieden werden. Wie aus Figur 10 ersichtlich, ist erfindungsgemäß eine Formentlüftung, insbesondere zur Absaugung der Kerngase an den Kernwänden angeordnet. Diese besteht aus einem Entlüftungseinsatz 13, der mit einem Entlüftungsrohr 17 verbunden ist, das wiederum in einem Kernsatz 18 angeordnet ist. Der Effekt der Absaugung kann noch durch Vakuum oder mittels Venturi-Düsen zusätzlich verstärkt und beschleunigt werden.

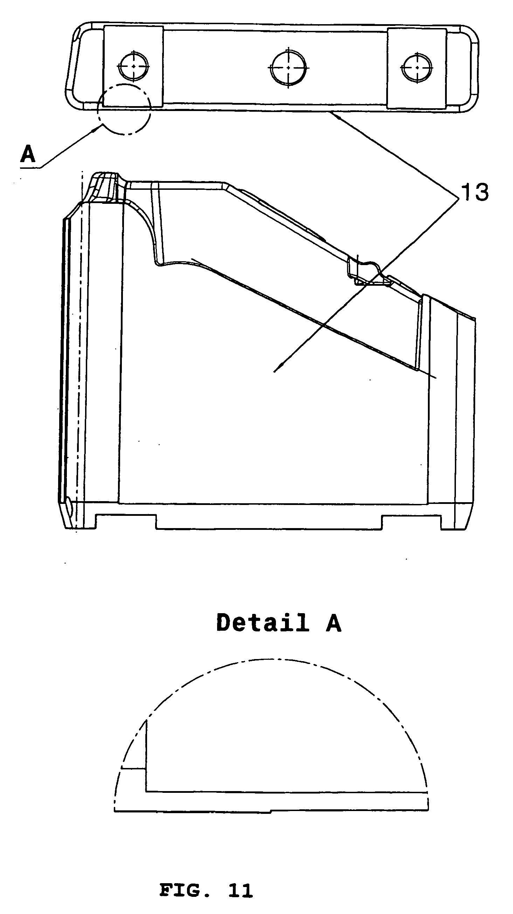

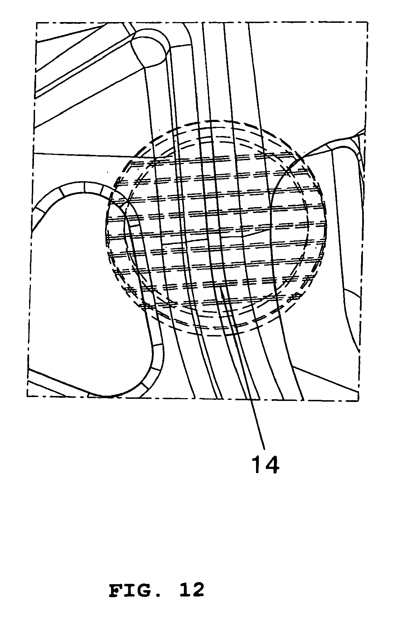

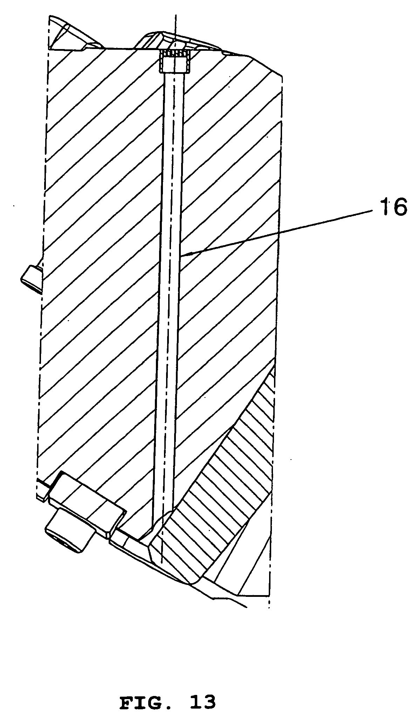

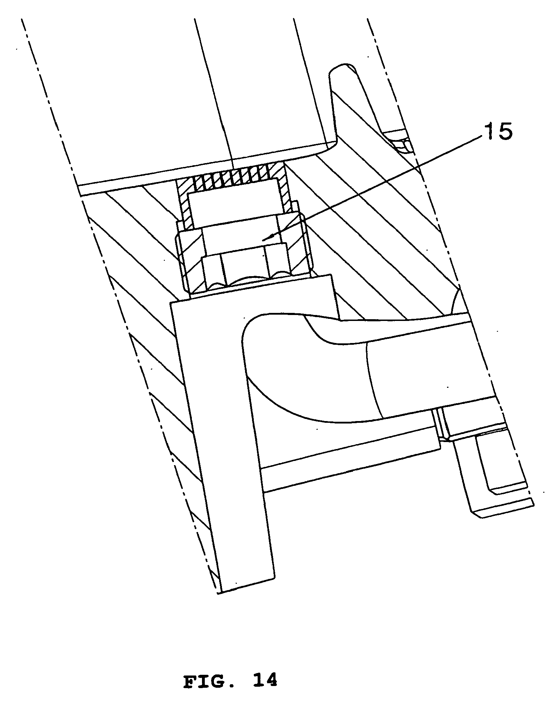

Spezielle Varianten der vorliegenden Erfindung sehen gemäß den Figuren 11 - 14 Formentlüftungen durch Verwendung von Luftbändern 13, durch Rippenentlüftung mit Schlitzdüsen 14, 15 oder durch Konturentlüftung mit Schlitzdüsen 16 vor.

In Verbindung mit einer Kornfeinung der Schmelze durch Bor und/oder Titan in Form von AlB₂, Al₃Ti und AlTiC kann ein Dichteindex von kleiner 10 % eingestellt werden.

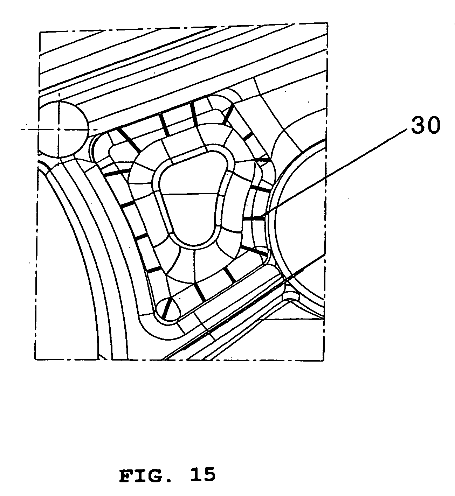

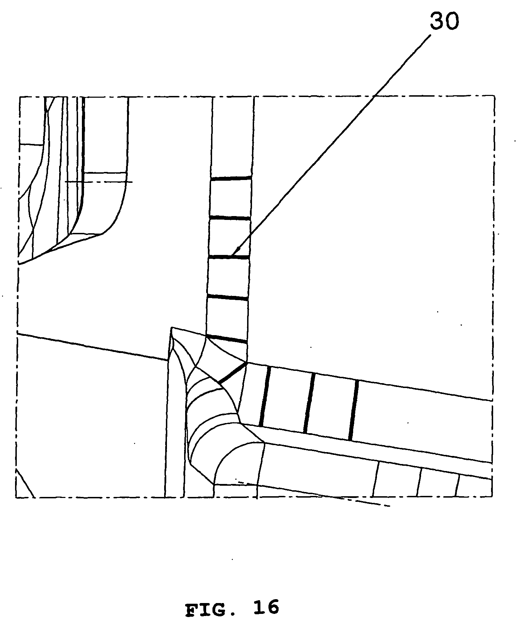

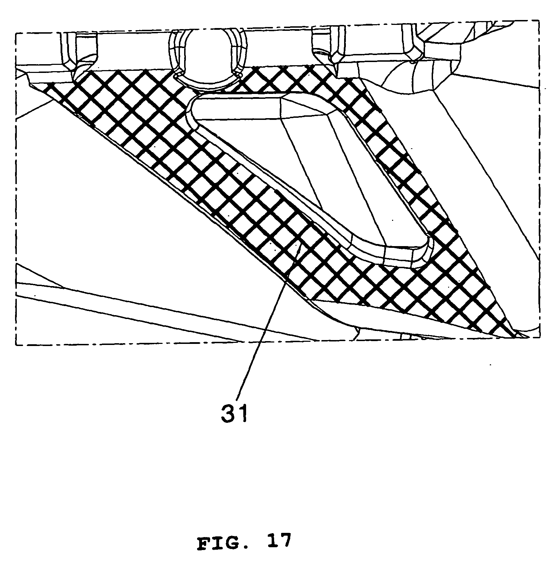

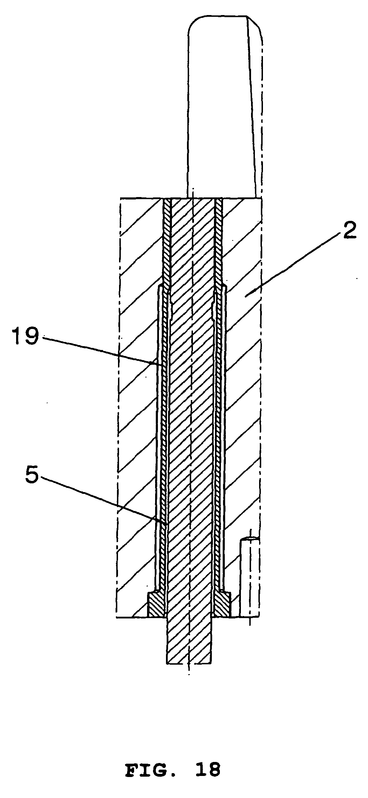

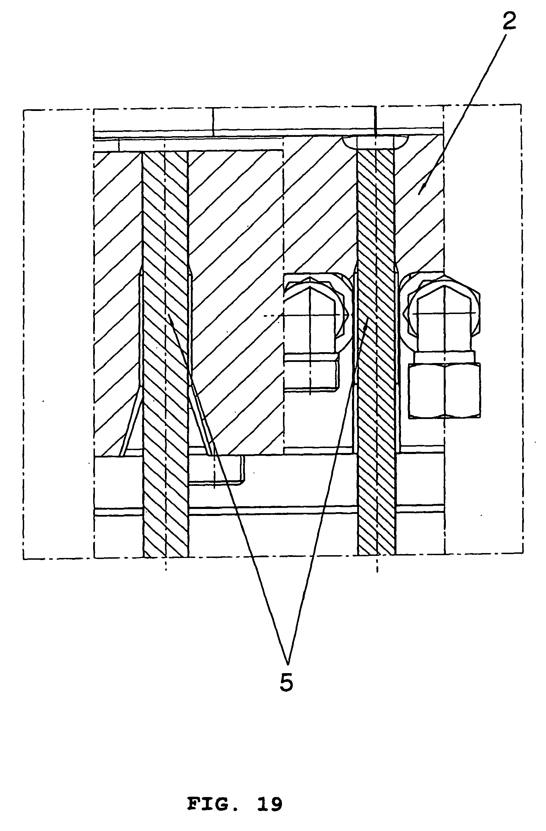

Gemäß einer Variante der vorliegenden Erfindung ist vorgesehen, die Schmelze von unten aufsteigend (Niederdruckkokille) oder von oben fallend (Schwerkraftkokille)in die schalenförmige Kokille einzufüllen, wobei die Kokillenwand während der Füllphase eine Temperatur von 350 bis 410°C aufweist und die Schmelze selektiv und intermittierend mit einer Abkühlrate von 5 bis 10°C/s an den Zug-Druckbelasteten Querschnitten bis zur vollständigen Erstarrung abgeschreckt wird, während die duktilen Bereiche des Fahrwerkteils mit einer Abkühlrate von 0,1 bis 4°C/s abgekühlt werden. Dies gelingt in der Großserienfertigung nur, wenn bei der Konstruktion des Bauteiles Fließhilfen 30 und Kreuzriffelungen 31 in der Kokillenwand vorgesehen werden gemäß den Figuren 15, 16, 17. Diese beschleunigen die Formfüllung, so dass die Erstarrung des Gussstückes unter jeweils konstanten Prozessbedingungen erfolgen kann. Üblicherweise werden die Fließhilfen und Riffelungen mit Kugelfräsern des Durchmessers R1 und R0,5 gefertigt. Unmittelbar nach der Erstarrung wird das Gussteil aus der Form entfernt und kalt ausgehärtet. Das Ausstoßen des Gussstückes erfolgt mittels Auswerfern 5, die in Figur 18 mit Verschleißhülse dargestellt sind. Erfindungsgemäß werden die Auswerfer 5 gleichzeitig als Entlüftung über Entlüftungskanal 19 und zur partiellen Kühlung der Form verwendet. Vorzugsweise sind die Auswerfer 5 daher in speziell hierfür funktionell aufgedickten Bereichen der Kokillenschale 2 für eine wirksame Formkühlung angeordnet (siehe Figur 19).

Zusammenfassend lässt sich feststellen, dass durch gezielte Erstarrung einer AlSiZnMg-Legierung Fahrwerksteile mit hoher mechanischer Festigkeit (Streckgrenze größer 160 Mpa) und hervorragender Temperaturstabilität (130°C, 500 h) bei gleichzeitig guten Dehnungseigenschaften (A größer 5%) hergestellt werden können. Das Korrosionsverhalten konnte durch ein besonders ausgebildetes Mischkristallgefüge positiv beeinflusst werden, da auch unter ungünstigen Bedingungen kein selektiver Korrosionsangriff erfolgte, sondern ein gleichmäßiger Flächenabtrag festgestellt wurde, der sich innerhalb der zulässigen Toleranzbreite hielt.

Der Dichteindex kleiner 10% wurde durch Behandlung der Schmelze mit Inertgasen oder Formiergasen (Stickstoff-/ Argon-Wasserstoffgemische) eingestellt. Die Teile waren lunkerarm, die Festigkeitswerte waren an allen Ecken und Querschnittsbereichen eines Fahrwerkteiles identisch. Die Oberflächengüte war hervorragend, da nur eine geringe Porosität auftrat.

Mittels der vorerwähnten Fließhilfen bzw. der Riffelung, wobei die Rillen etwa 0,5 mm tief und etwa 1 mm breit waren, gelingt es erfindungsgemäß, der Rissbildung entgegenzuwirken. Die Oberflächendichte konnte erhöht werden, wenn gleichzeitig eine wirksame Entlüftung durchgeführt wurde.

## Patentansprüche

1. Vorrichtung zur Herstellung von hoch beanspruchbaren Fahrwerksteilen aus einer AlSiZnMg-Legierung durch Schwerkraft- oder Niederdruckguss, bestehend aus einem Stahlgrundrahmen (1), einem oder mehreren Formsegmenten (2, 3) und einer Temperatursteuerung für die Formsegmente in Verbindung mit einer Wasser- oder Luftkühlung sowie einer Beheizung, **dadurch gekennzeichnet, dass**
- die Formsegmente (2, 3) aus Kokillenschalen mit dünn- und dickwandigen Bereichen gebildet werden, die schwimmend auf dem Grundrahmen (1) gelagert sind, wobei die dickwandigen Bereiche als Auflager für die Formsegmente auf dem Grundrahmen ausgebildet sind,
- dass in den dünnwandigen Bereichen Spannbolzen zur punktuellen Verspannung der Formsegmente mit dem Grundrahmen angeordnet sind
- und dass zur Kühlung der Formsegmente auf punktförmig bis flächig ausgebildeten Zonen Wasseranschlüsse oder Luftanschlüsse vorgesehen sind, wobei die örtliche Temperaturverteilung über Thermofühler (11) erfassbar ist und die jeweilige thermische Spannung in den Formsegmenten über die Spannbolzen kompensiert wird.

2. Vorrichtung nach Anspruch 1, **dadurch gekennzeichnet, dass** die Auflager in den Randbereichen der Formsegmente (2, 3) angeordnet und mit je einer Zentrierung und einer Gleitfläche versehen sind, die mit einer entsprechend geformten Gegenfläche auf dem Stahlrahmen (1) korrespondiert.

3. Vorrichtung nach einem der vorhergehenden Ansprüche, **dadurch gekennzeichnet, dass** im Bereich der speziell hierfür funktionell aufgedickten Kokillenschale die Auswerfer (5) zur gleichzeitigen Entlüftung und Kühlung des Formhohlraums angeordnet sind.

4. Vorrichtung nach einem der vorhergehenden Ansprüche, **dadurch gekennzeichnet, dass** die Kokille über Schlitzdüsen und Entlüftungseinsätze (13-16) entlüftet wird.

5. Vorrichtung nach einem der vorhergehenden Ansprüche, **dadurch gekennzeichnet, dass** im Bereich von Kernmarken oder Kerneinsätzen bzw. Einlegeteilen eine Absaugung der Kerngase über Vakuumanschlüsse erfolgt.

6. Vorrichtung nach einem der vorhergehenden Ansprüche, **dadurch gekennzeichnet, dass** im Bereich des Eingusses eine Tümpelkühlung (7) angeordnet ist, dass die Auswerfer (5) zur Entlüftung und partiellen Kühlung der Form mit entsprechenden Anschlüssen versehen sind und in den hochbeanspruchten Bereichen der Form Einsätze (4) auf Wolfram-Nickel-Basis angeordnet sind.

7. Vorrichtung nach einem der vorhergehenden Ansprüche, **dadurch gekennzeichnet, dass** zur Temperatursteuerung einer punktförmig ausgebildeten Zone eine Stichkühlung mit einem Durchmesser von 10 - 40 mm, vorzugsweise 15 - 25 mm in einem Formsegment angeordnet ist.

8. Vorrichtung nach einem der vorhergehenden Ansprüche, **dadurch gekennzeichnet, dass** für eine Kühlung der Formsegmente in einem flächig ausgebildeten Bereich Kühlplatten oder Kühlrippen mit einer Fläche von 1000 bis 50.000 mm² verwendet werden.

9. Verfahren zur Herstellung von auf Zug, Druck und Torsion beanspruchbaren Kfz-Fahrwerksteilen mit über den jeweiligen Querschnitt einstellbarer mechanischer Festigkeit, einer hohen Duktilität und Temperaturstabilität aus einer AlSiZnMg-Legierung durch Kokillenguss, **gekennzeichnet dadurch, dass** eine Aluminiumlegierung mit (in Gew.%)
| | |
|---|---|
| Si | 5 - 11 % |
| Zn | 4 - 9 % |
| Mg | 0,2 - 1,0 % |
| Sr | 60 - 500 ppm |
sowie wahlweise mindestens einem der folgenden Elemente
| | |
|---|---|
| Mo | 0,01 - 0,15 % |
| B | 0,001 - 0,010 % |
und maximal
| | |
|---|---|
| Zr | 0,15 % |
| Ti | 0,15 % |
| Fe | 0,30 % |
| Cu | 0,10 % |
sowie weiteren Verunreinigungen
einzeln bis zu 0,07 %
insgesamt bis zu 0,15 %
in einer Vorrichtung nach einem der Ansprüche 1 bis 8 vergossen wird, wobei die einzelnen Formsegmente dieser Vorrichtung in einer punktförmig bis flächig ausgebildeten Zone gekühlt oder beheizt werden und dabei ein interdendritisches, eutektisches Mischkristallgefüge erzeugt wird, bestehend aus Al- Mischkristallen und AlSi-Eutektikum mit kohärenten Phasen, gebildet durch Ausscheidungen von MgZn₂ und/oder Mg₃Zn₃Al₂, und dann unmittelbar nach der Erstarrung das Gussteil der Form entnommen und kaltausgehärtet wird.

10. Verfahren nach Anspruch 9, **dadurch gekennzeichnet, dass** das Massenverhältnis Kokille/Fahrwerksteile gleich 0,9 - 1,2 beträgt und die eutektische Schmelze mit einer Abkühlrate von 0,01 bis 10° c/s zur Erzelung einer breiartigen Erstarrung mit interdendritisch im AlSi-Eutektikum verteilten intermetallischen Phasen in der Kokillenschale intermittierend gekühlt oder beheizt wird, wobei das AlSiZnMg-Mischkristallgefüge in jedem Querschnitt des Fahrwerksteiles homogen und identisch ausgebildet wird.

11. Verfahren nach einem der Ansprüche 9 und 10, **dadurch gekennzeichnet, dass** zur Kornfeinung der Schmelze B und/oder Ti in Form von AlB₂, Al₃Ti und AlTiC zugesetzt werden und durch eine Schmelzebehandlung (Entgasung) ein Dichteindex von kleiner 10 % eingestellt wird.

12. Verfahren nach einem der Ansprüche 9 bis 11, **dadurch gekennzeichnet, dass** die Schmelze von unten aufsteigend (Niederdruckkokille) bzw. von oben fallend (Schwerkraftkokille)in die schalenförmige Kokille eingefüllt wird, wobei die Kokillenwand während der Füllphase eine Temperatur von 350 bis 410° C aufweist und die Schmelze selektiv und intermittierend mit einer Abkühlrate von 5 bis 10° C/s an den Zug-/Druck-belasteten Querschnitten bis zur vollständigen Erstarrung abgeschreckt wird, während die duktilen Bereiche des Fahrwerksteils mit einer Abkühlrate von 0,1 bis 4 C/s abgekühlt werden.

## Claims

1. Device for the production of chassis parts of AlSiZnMg alloy which are capable of withstanding high stresses, by gravity or low-pressure casting, comprising a steel base frame (1), one or more mould segments (2, 3) and a temperature control for the mould segments in conjunction with water cooling or air cooling as well as heating, **characterized in that**
- the mould segments (2, 3) are made of permanent mould shells, having thin-walled and thick-walled regions, that are floatingly supported on the base frame (1), the thick-walled regions being formed as supports for the mould segments on the base frame,
- clamp bolts are arranged in the thin-walled regions to achieve a punctual clamping of the mould segments to the base frame;
- and that, to cool the mould segments, water connections or air connections are provided on zones having punctiform to surface-like configuration, the local temperature distribution being detectable by means of thermal sensors (11), and the respective thermal stress in the mould segments being compensated for by means of the clamp bolts.

2. Device according to claim 1, **characterized in that** the supports are arranged in the marginal regions of the mould segments (2, 3) and are each provided with a centring device and a sliding surface that corresponds to a correspondingly shaped counter surface on the steel frame (1).

3. Device according to any one of the preceding claims, **characterized in that** in the region of the permanent mould shell, the thickness of which has been functionally enlarged specifically for that purpose, the ejectors (5) are arranged for simultaneous venting and cooling of the mould cavity.

4. Device according to any one of the preceding claims, **characterized in that** the permanent mould is vented via slot nozzles and venting inserts (13-16).

5. Device according to any one of the preceding claims, **characterized in that** in the region of core prints, or core inserts or inserted parts, suction of the core gases is performed via vacuum connections.

6. Device according to any one of the preceding claims, **characterized in that** in the region of the sprue a pool cooling (7) is arranged, that to vent and partially cool the mould the ejectors (5) are provided with corresponding connections, and that in the regions of the mould that are subject to high stresses tungsten-nickel-based inserts (4) are arranged.

7. Device according to any one of the preceding claims, **characterized in that** to control the temperature of a zone having punctiform configuration, a vertical cooling hole is arranged in a mould segment, said vertical cooling hole having a diameter of 10 - 40 mm, preferably 15 - 25 mm.

8. Device according to any one of the preceding claims, **characterized in that** to cool the mould segments in a region having a surface-like configuration, cooling plates or cooling ribs, having a surface area of 1000 to 50,000 mm², are used.

9. Method for producing motor vehicle chassis parts which can be subjected to tensile stress, compressive stress and torsion and which have a mechanical strength that can be adjusted over the respective cross-section, and high ductility and temperature stability, from an AlSiZnMg alloy by means of permanent mould casting, **characterized in that** an aluminium alloy, comprising (in percent by weight)
| | |
|---|---|
| Si | 5 - 11% |
| Zn | 4 - 9% |
| Mg | 0.2 - 1.0% |
| Sr | 60 - 500 ppm |
and optionally at least one of the following elements
| | |
|---|---|
| Mo | 0.01 - 0.15% |
| B | 0.001 - 0.010% |
and maximally
| | |
|---|---|
| Zr | 0.15% |
| Ti | 0.15% |
| Fe | 0.30% |
| Cu | 0.10% |
as well as further impurities
individually up to 0.07%
in total, up to 0.15%,
is cast in a device according to any one of claims 1 to 8, the individual mould segments of said device being cooled or heated in a zone of punctiform to surface-like configuration, thus producing an interdendritic, eutectic mixed crystal structure consisting of Al mixed crystals and AlSi eutectic with coherent phases formed by precipitations of MgZn2 and/or Mg₃Zn₃Al₂, and the casting, immediately after solidification, being removed from the mould and naturally aged.

10. Method according to claim 9, **characterized in that** the mass ratio permanent mould/chassis parts is 0.9 to 1.2 and that the eutectic melt is intermittently cooled or heated in the permanent mould shell, at a rate of cooling of 0.01 to 10 °C/s, to obtain a pasty solidification with intermetallic phases that are interdendritically distributed in the AlSi eutectic, whereby an AlSiZnMg mixed crystal structure is formed that is homogenous and identical in each cross-section of the chassis part.

11. Method according to any one of claims 9 and 10, **characterized in that** to achieve a grain refinement of the melt B and/or Ti, in the form of AlB₂, Al₃Ti and AlTiC, are added, and that by a treatment of the melt (degassing) a density index of less than 10% is adjusted.

12. Method according to any one of claims 9 to 11, **characterized in that** the melt is filled into the shell-shaped permanent mould such that it rises from the bottom (low-pressure permanent mould) or such that it falls down from the top (gravity permanent mould), the wall of the permanent mould having a temperature of 350 to 410 °C during the filling phase, and the melt being quenched selectively and intermittently at the cross-sections that are subjected to tensile stress/compressive stress, at a cooling rate of 5 to 10 °C/s, until complete solidification occurs, while the ductile regions of the chassis part are cooled at a cooling rate of 0.1 to 4 C/s.

## Revendications

1. Dispositif de fabrication de pièces de châssis susceptibles d'être soumises à de fortes contraintes à partir d'un alliage AlSiZnMg par coulée par gravité ou à basse pression, constitué d'un cadre de base (1) en acier, d'un ou plusieurs segments de moule (2, 3) et d'une régulation de température pour les segments de moule associée à un refroidissement à l'eau ou à air et un chauffage, **caractérisé en ce que**
- les segments de moule (2, 3) sont formés par des lingotières ou coquilles qui possèdent des zones à paroi mince et à paroi épaisse et qui sont montées de manière flottante sur le cadre de base (1), les zones à paroi épaisse étant réalisées sous forme d'appuis pour les segments de moule sur le cadre de base,
- **en ce que** des boulons de serrage sont disposés dans les zones à paroi mince, servant à un serrage ponctuel des segments de moule sur le cadre de base,
- et **en ce que** des raccords d'eau ou raccords d'air sont prévus pour assurer le refroidissement des segments de moule sur des zones ponctuelles ou de configuration plane, la répartition locale des températures pouvant être détectée par des capteurs thermiques (11) et la contrainte thermique respective dans les segments de moule étant compensée par les boulons de serrage.

2. Dispositif selon la revendication 1, **caractérisé en ce que** les appuis sont agencés dans la région des bords des segments de moule (2, 3) et munis chacun d'un centrage et d'une surface de glissement en correspondance avec une contre-surface de forme correspondante sur le cadre d'acier (1).

3. Dispositif selon l'une des revendications précédentes, caractérisé en ce qu'au niveau de la coquille spécialement épaissie à cet effet sont disposés des éjecteurs (5) servant à assurer simultanément la ventilation et le refroidissement de la cavité du moule.

4. Dispositif selon l'une des revendications précédentes, **caractérisé en ce que** la coquille est ventilée par des filières à fente et des inserts de ventilation (13-16).

5. Dispositif selon l'une des revendications précédentes, caractérisé en ce qu'au niveau des portées de noyau ou inserts de noyau resp. des pièces d'insertion, une aspiration des gaz de noyau est effectuée par des raccords sous vide.

6. Dispositif selon l'une des revendications précédentes, caractérisé en ce qu'au niveau de l'orifice de coulée, un refroidissement par immersion (7) est agencé, en ce que les éjecteurs (5) servant à assurer la ventilation et le refroidissement partiel du moule sont pourvus de raccords correspondants et en ce que des inserts (4) à base de tungstène-nickel sont disposés dans les zones soumises à de fortes contraintes du moule.

7. Dispositif selon l'une des revendications précédentes, **caractérisé en ce que**, pour assurer la régulation de température d'une zone ponctuelle, un refroidissement par perçage de 10 à 40 mm de diamètre, de préférence de 15 à 25 mm, est agencé dans un segment de moule.

8. Dispositif selon l'une des revendications précédentes, **caractérisé en ce que**, pour assurer un refroidissement des segments de moule dans une zone de configuration plane, des plaques de refroidissement ou nervures de refroidissement d'une superficie de 1000 à 50 000 mm² sont utilisées.

9. Procédé de fabrication de pièces de châssis d'automobile susceptibles d'être soumises à des contraintes de traction, de pression et de torsion et présentant une résistance mécanique réglable sur leur section transversale respective, une ductilité et une résistance thermique élevées à partir d'un alliage AlSiZnMg par coulée en coquille, caractérisé en ce qu'un alliage d'aluminium avec (en % en poids)
| | |
|---|---|
| Si | 5-11 % |
| Zn | 4-9% |
| Mg | 0,2 - 1,0 % |
| Sr | 60 - 500 ppm |
et optionnellement au moins un des éléments suivants
| | |
|---|---|
| Mo | 0,01 - 0,15 % |
| B | 0,001 - 0,010 % |
et au maximum
| | |
|---|---|
| Zr | 0,15 % |
| Ti | 0,15 % |
| Fe | 0, 30 % |
| Cu | 0,10 % |
ainsi que d'autres impuretés
< 0,07 % chacune
< 0,15 au total
est coulé dans un dispositif selon l'une des revendications 1 à 8, les différents segments de moule de ce dispositif étant refroidis ou chauffés dans une zone ponctuelle ou de configuration plane et une structure cristalline mixte eutectique interdendritique étant générée, constituée de cristaux mixtes d'aluminium et d'un eutectique Al-Si à phases cohérentes, formés par des précipités de MgZn₂ et/ou Mg₃Zn₃Al₂, et en ce qu'immédiatement après la solidification, la pièce moulée est retirée du moule et durcie à froid.

10. Procédé selon la revendication 9, **caractérisé en ce que** le rapport massique coquille/pièces de châssis est de 0,9 - 1,2 et **en ce que** la masse fondue eutectique est refroidie ou chauffée par intermittence dans la coquille à une vitesse de refroidissement de 0,01 à 10 °C/s, de manière à obtenir une solidification pâteuse avec des phases intermétalliques réparties de manière interdendritique dans l'eutectique Al-Si, la structure cristalline mixte AlSiZnMg étant réalisée de manière homogène et identique dans chaque section transversale de la pièce de châssis.

11. Procédé selon l'une des revendications 9 et 10, **caractérisé en ce que**, pour affiner les grains, on ajoute à la masse fondue du bore et/ou du titane sous forme de AlB₂, Al₃Ti et AlTiC et on règle un indice de densité inférieur à 10 % par un traitement de la masse fondue (dégazéification).

12. Procédé selon l'une des revendications 9 à 11, **caractérisé en ce que** la masse fondue est versée dans la coquille depuis le bas dans le sens ascendant (coquille pour la coulée à basse pression) ou depuis le haut dans le sens descendant (coquille pour la coulée par gravité), la paroi de coquille présentant une température de 350 à 410 °C durant la phase de remplissage, et la masse fondue est refroidie sélectivement et par intermittence, à une vitesse de refroidissement comprise entre 5 et 10 °C/s, aux sections transversales soumises à des contraintes de traction/pression jusqu'à la solidification complète, alors que les zones ductiles des pièces de châssis sont refroidies à une vitesse de refroidissement comprise entre 0,1 et 4 °C/s.
